# FASCICULE DE BREVET EUROPEEN

(11) **EP 1 825 557 B1**
(45) Date de publication et mention de la délivrance du brevet: **18.04.2012**
(21) Numéro de dépôt: 05811862.1
(22) Date de dépôt: 20.10.2005
(51) Int. Cl.: H01M 10/0525, H01M 10/48, H01M 10/42, H02J 7/00

(54) **PROCEDE DE GESTION D'UNE BATTERIE RECHARGEABLE ET BATTERIE RECHARGEABLE ADAPTEE POUR METTRE EN OEVRE CE PROCEDE**
VERFAHREN ZUR STEUERUNG EINER WIEDERAUFLADBAREN BATTERIE UND WIEDERAUFLADBARE BATTERIE ZUR AUSFÜHRUNG DES VERFAHRENS
METHOD FOR CONTROLLING A RECHARGEABLE BATTERY AND RECHARGEABLE BATTERY FOR CARRYING OUT SAID METHOD

(30) Priorité: 28.10.2004 FR 0411534
(43) Date de publication de la demande: 29.08.2007
(73) Titulaire: ASTRIUM SAS, 75016 Paris (FR)
(72) Inventeur: DIRAISON, Jean-François, F-31200 Toulouse (FR); STEPHAN, Jean-Marc, F-31320 Auzeville Tolosane (FR)
(74) Mandataire: Cabinet Plasseraud
(86) Numéro de dépôt international: PCT/FR2005/002610
(87) Numéro de publication internationale: WO 2006/048522

(56) Documents cités:
- WO-A-90/10334
- US-A- 4 303 877
- US-A1- 2001 006 747
- US-A1- 2004 001 996

## Description

La présente invention se rapporte à un procédé de gestion d'une batterie rechargeable et à une batterie rechargeable adaptée pour mettre en oeuvre ce procédé.

Elle concerne plus particulièrement un procédé de gestion d'une batterie rechargeable comprenant au moins deux modules de cellules électrochimiques connectés en série, les cellules électrochimiques étant connectées en parallèle les unes aux autres à l'intérieur de chaque module.

Le document EP 0 498 679 décrit un exemple de gestion de la charge d'une batterie constituée de plusieurs cellules connectées en série. Pour chaque cellule, un circuit de limitation de charge comprend une branche de dérivation de courant connectée en parallèle avec cette cellule. Lorsque la tension aux bornes de la cellule dépasse une tension de saturation, le courant de charge de la cellule est transmis par la branche de dérivation de sorte qu'une surcharge de la cellule est évitée. La durée de vie de chaque cellule est ainsi augmentée.

Néanmoins, dans une telle batterie, une cellule défaillante continue d'être traversée par le courant délivré par la batterie. Ceci entraîne un chauffage de la cellule défaillante et une baisse d'efficacité de l'ensemble de la batterie.

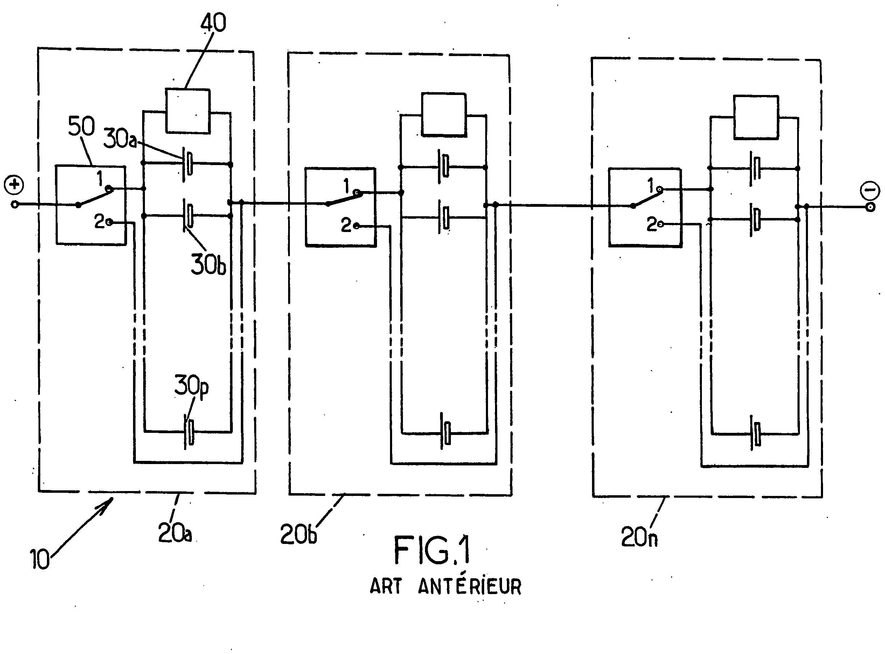

Pour éviter cet inconvénient provoqué par la présence d'une cellule défaillante au sein d'une batterie, il est connu d'utiliser un dispositif tel que représenté sur la figure 1 pour neutraliser une cellule ou un module de cellules devenu défaillant.

Sur la figure 1, une batterie 10 comporte n modules référencés 20a ,..., 20n, connectés en série les uns aux autres. Chaque module est lui-même constitué de plusieurs cellules électrochimiques référencées 30a, ..., 30p. Les cellules 30a, ..., 30p sont connectées en parallèle entre elles à l'intérieur de chaque module. Chaque module 20a, ..., 20n de cellules comprend en outre un circuit de limitation de charge 40. A l'entrée de chaque module 20a, ..., 20n, un commutateur 50 permet de détourner l'ensemble du courant qui traverse la batterie dans une branche de contournement du module. Ainsi, lorsqu'une cellule d'un module donné devient défaillante, la commande du commutateur correspondant permet de neutraliser ce module, de sorte que le courant de batterie ne le traverse plus. Un tel agencement de batterie comprend de nombreux composants électriques et électroniques qui la rendent encombrante, onéreuse et lourde. Ces inconvénients sont incompatibles avec de nombreuses utilisations de batteries, dont en particulier, l'alimentation énergétique d'un satellite.

Un but de la présente invention consiste à pallier ces inconvénients.

Pour cela, selon l'invention, un procédé du genre en question est caractérisé en ce que qu'il comporte les étapes suivantes .
- (a) détecter un module défaillant ;
- (b) faire traverser le module défaillant par un courant de décharge de façon à provoquer une réaction électrochimique dans le module défaillant, ladite réaction résultant en la formation d'un chemin de court-circuit entre des bornes de connexion dudit module défaillant ;
- (c) utiliser la batterie en faisant passer, au travers du module défaillant, un courant électrique généré par la décharge d'au moins un module différent dudit module défaillant.

Grâce à ces dispositions, il n'est pas nécessaire de prévoir un commutateur ni une branche de contournement pour chaque module, destinés à être activés lorsqu'une cellule du module devient défaillante. La batterie est donc plus simple, plus légère et moins onéreuse. En effet, grâce à la formation du chemin de court-circuit entre les bornes du module qui comprend la cellule défaillante, ce module est neutralisé de façon interne. Le fonctionnement des autres modules de la batterie n'est alors pas perturbé par le module qui comprend la cellule défaillante.

Dans divers modes de réalisation du procédé selon l'invention, on peut éventuellement avoir recours en outre à l'une et/ou à l'autre des dispositions suivantes :
- les cellules sont du type lithium-ion ;
- le courant de décharge qui provoque la réaction de formation du chemin de court-circuit est généré par la décharge d'au moins un module de la batterie différent du module défaillant ;
- le courant de décharge qui provoque la réaction de formation du chemin de court-circuit est utilisé en outre pour alimenter un dispositif externe à la batterie ;
- une première décharge partielle du module défaillant est effectuée avant l'étape (b) ;
- chaque module de cellules électrochimiques comprend un circuit de limitation de charge dudit module, connecté en parallèle audit module, et le courant de décharge partielle du module défaillant traverse le circuit de limitation de charge dudit module défaillant ;
- le courant de décharge partielle du module défaillant est commandé par variation d'un signal de référence du circuit de limitation de charge ;
- le courant de décharge qui provoque la réaction de formation du chemin de court-circuit dans le module défaillant engendre une inversion du module défaillant ;
- le chemin de court-circuit comprend des dendrites conductrices formées dans au moins une cellule du module défaillant ;
- les dendrites conductrices sont métalliques ;
- le nombre de cellules par module est compris entre 3 et 13 ; et
- le nombre de modules dans la batterie est compris entre 9 et 24.

L'invention propose aussi une batterie rechargeable comprenant au moins deux modules de cellules électrochimiques connectés en série. Les cellules électrochimiques sont connectées en parallèle les unes aux autres à l'intérieur de chaque module. Chaque module comprend en outre un circuit de limitation de charge dudit module connecté en parallèle audit module, qui comprend :
- une branche de dérivation connectée entre une borne d'entrée et une borne de sortie du module de batterie correspondant ;
- une source de signal de référence ;
- un dispositif de régulation adapté pour contrôler un courant dans ladite branche de dérivation sur la base d'un signal de commande reçu sur une borne de commande du dispositif de régulation ; et
- au moins un opérateur différentiel comprenant une borne de sortie reliée à la borne de commande du dispositif de régulation, une première borne d'entrée connectée pour recevoir un signal représentatif de la tension aux bornes dudit module de batterie, et une seconde borne d'entrée connectée pour recevoir ledit signal de référence, l'opérateur différentiel étant adapté pour générer le signal de commande en fonction d'une différence entre les signaux reçus sur lesdites première et seconde bornes d'entrée de l'opérateur différentiel ;
la batterie étant caractérisée en ce que la source de signal de référence de chaque module de batterie peut être variée.

Dans divers modes de réalisation de la batterie selon l'invention, on peut éventuellement avoir recours en outre à l'une et/ou à l'autre des dispositions suivantes :
- la branche de dérivation comprend au moins un élément résistif ;
- le signal représentatif de la tension de sortie de chaque module est obtenu par un pont diviseur de tension connecté en parallèle audit module ;
- la batterie comprend au moins un récepteur radio, les sources respectives de signal de référence des modules de cellules électrochimiques étant reliées au récepteur radio, et adaptées pour varier le signal de référence correspondant en fonction d'une commande radio reçue ;
- l'opérateur différentiel de chaque circuit de limitation de charge comprend une boucle de rétroaction ;
- la boucle de rétroaction comprend une résistance et un condensateur connectés en série ;
- le dispositif de régulation du circuit de limitation de charge de chaque module comprend au moins un transistor, ledit transistor ayant deux bornes principales connectées à la branche de dérivation dudit module ;
- le dispositif de régulation de chaque circuit de limitation de charge comprend au moins deux transistors associés en montage Darlington ;
- le nombre de cellules par module est compris entre 3 et 13 ; et
- le nombre de modules par batterie est compris entre 9 et 24.

Par ailleurs, l'invention a également pour objet un satellite qui comprend au moins une batterie telle que décrite précédemment.

Le satellite peut comprendre en outre un détecteur de module défaillant et un émetteur radio agencés pour transmettre des codes d'identification d'un module défaillant dans la batterie.

Le satellite peut également comprendre un récepteur radio auquel sont reliées les sources de signal de référence des modules de cellules, chaque source de signal de référence étant adaptée pour varier le signal de référence correspondant en fonction d'une commande radio reçue.

D'autres caractéristiques et avantages de l'invention apparaîtront au cours de la description suivante d'un mode de réalisation, donné à titre d'exemple non limitatif, en regard des dessins joints.

Sur les dessins :
- la figure 1, déjà décrite, représente une batterie telle que connue de l'état de la technique ;
- la figure 2 représente une batterie selon l'invention ;
- la figure 3 est un diagramme d'évolution de la tension aux bornes d'un module de batterie lors de la mise en oeuvre d'un procédé de gestion de batterie selon l'invention ; et
- la figure 4 est un diagramme électrique d'un circuit de limitation de charge pouvant être utilisé pour mettre en oeuvre l'invention.

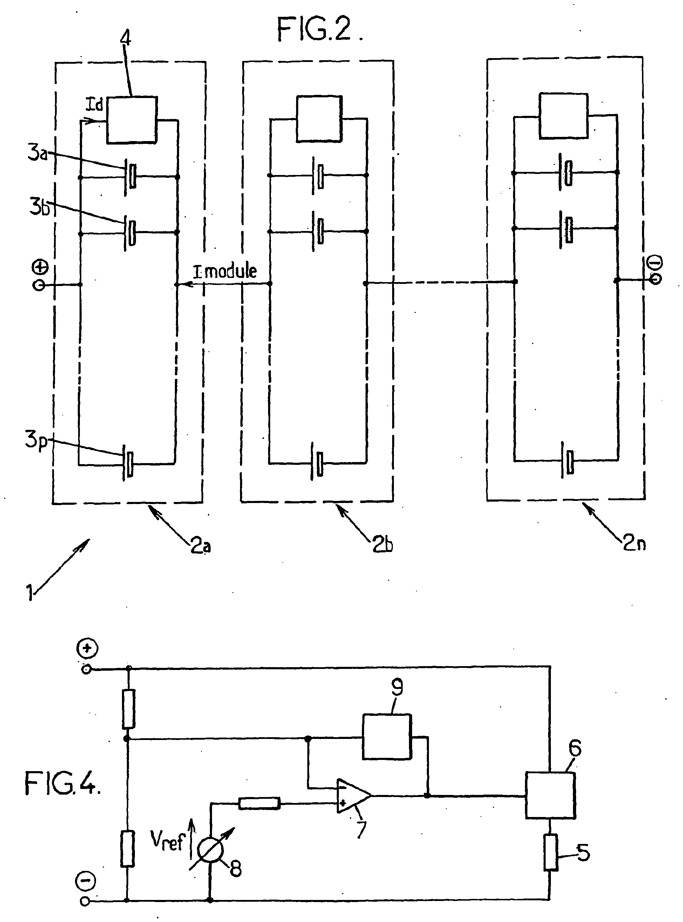

Sur la figure 2, une batterie 1 comprend plusieurs modules 2a, ..., 2n connectés en série les uns aux autres. Chaque module 2a, ..., 2n peut lui-même comprendre plusieurs cellules 3a, ..., 3p connectées en parallèle les unes avec les autres. Les cellules 3a, ..., 3p peuvent être du type lithium-ion.

Un circuit de limitation de charge 4 est connecté aux bornes de chacun des modules 2a, ..., 2n. Il permet d'éviter une surcharge du module auquel il est connecté. En référence à la figure 4, chaque circuit de limitation de charge 4 comporte une branche de dérivation, qui comprend au moins une résistance 5. Un dispositif de régulation 6 contrôle le courant dans la résistance 5 sur la base d'un signal de commande délivré par un opérateur différentiel 7. Cet opérateur différentiel 7 comporte deux bornes d'entrée et une borne de sortie. La première borne d'entrée de l'opérateur différentiel 7 est connectée à une source de signal de référence 8, telle que, par exemple, une source de tension. La seconde borne d'entrée est connectée, au point intermédiaire d'un pont diviseur de tension, lui-même connecté en parallèle entre les bornes du module de cellules. Ainsi, la seconde borne d'entrée de l'opérateur différentiel 7 reçoit un signal représentatif de la tension aux bornes du module, à savoir une fraction déterminée de celle-ci. La borne de sortie de l'opérateur différentiel 7 est reliée à l'entrée de commande du dispositif de régulation 6.

Une boucle de rétroaction 9 relie la seconde borne d'entrée à la borne de sortie de l'opérateur différentiel 7. Cette boucle de rétroaction 9 peut être du type boucle proportionnelle intégrale, qui comporte une résistance connectée en série avec un condensateur. Une telle boucle de rétroaction 9 procure une dynamique de réponse du circuit de limitation de charge 4 particulièrement adaptée. En particulier, grâce à une telle boucle de rétroaction, l'intensité de charge du module est progressivement dérivée par la branche de dérivation, dans une proportion d'autant plus importante que la tension entre les bornes du module est proche de la tension de saturation.

Le dispositif de régulation 6 peut comporter des transistors connectés en montage Darlington. Un tel montage de transistors en cascade procure une caractéristique de fonctionnement à transition progressive entre un premier régime, dans lequel aucun courant ne passe par la branche de dérivation, et un second régime, dans lequel tout le courant de charge de la batterie est conduit par la branche de dérivation.

De plus, le montage Darlington permet de relier entre eux deux niveaux du dispositif de régulation 6 : un premier niveau, dit niveau de commande, comprenant l'opérateur différentiel 7, la source de signal de référence 8, la boucle de rétroaction 9 et le pont diviseur de tension, et un second niveau, dit niveau de puissance, comprenant la branche de dérivation.

Le circuit de limitation de charge 4 a deux fonctions. D'une part, il empêche la surcharge des cellules électrochimiques du module. Lorsque les cellules 3a, ..., 3p du module sont toutes chargées, la tension aux bornes du module est égale à la valeur de saturation. La tension représentative de la charge du module est comparée avec la tension de référence fournie par la source de référence 8. Lorsqu'elle est supérieure à un seuil prédéterminé, par exemple de 4V dans le cas d'une batterie lithium-ion, l'opérateur différentiel 7 commande le dispositif de régulation 6 de sorte que le courant de charge soit dérivé dans la branche de dérivation. Ainsi, une surcharge des cellules du module est évitée.

D'autre part, le circuit de limitation de charge 4 permet de provoquer la formation d'un court-circuit dans un module de la batterie devenu défaillant. Pour cela, un détecteur adapté repère un module défaillant sur la base, par exemple, de la tension, de la pression, de la température, et/ou de l'intensité de chaque module de la batterie. Il transmet une identification du module défaillant à une station de contrôle qui produit, en retour, une commande de neutralisation du module défaillant.

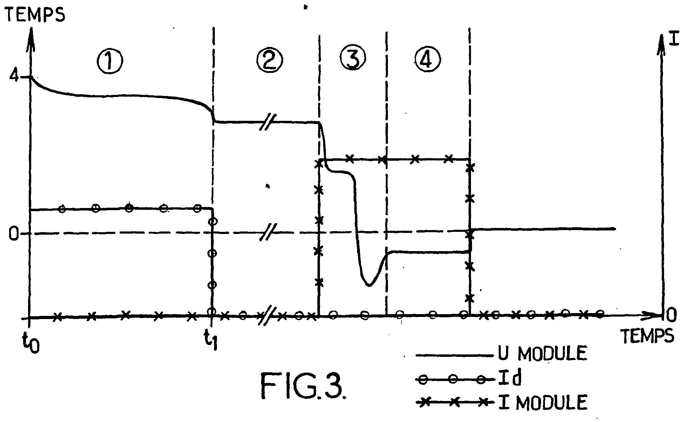

A réception de cette commande, la source de tension 8 réduit la tension de référence de façon à décharger partiellement le module défaillant. La nouvelle tension de référence peut être de 3V, par exemple, dans le cas d'une batterie lithium-ion. La tension aux bornes du module défaillant est alors supérieure à la tension de référence. L'opérateur différentiel 7 commande alors la commutation du dispositif de régulation, et les transistors de la branche de dérivation deviennent passants. Le courant qui traverse la résistance 5 provoque la décharge des cellules du module défaillant. Cela correspond à la phase 1 indiquée sur le graphique de la figure 3. Durant cette décharge, le courant Id dans le circuit de limitation de charge peut être sensiblement constant. La tension aux bornes du module diminue selon la courbe caractéristique de décharge d'une batterie. Lorsque la tension aux bornes du module atteint la valeur de la tension de référence réduite, on peut éventuellement stopper cette décharge en augmentant de nouveau la tension du signal de référence. Une phase d'attente 2 est possible. Durant cette phase 2, on attend une prochaine utilisation de la batterie par le satellite.

Lorsque cette batterie est utilisée (phase 3) pour alimenter un dispositif extérieur, le courant du module I_{module} augmente. Ce courant de décharge peut être sensiblement constant, en fonction des conditions d'utilisation de celui-ci. Il traverse la batterie en provoquant une surdécharge des cellules électrochimiques du module défaillant. Au cours de cette phase, la tension aux bornes du module défaillant peut s'inverser, c'est-à-dire devenir négative. C'est ce qu'on appelle le phénomène d'inversion. Pour une batterie de type lithium-ion, cela traduit la formation de dendrites métalliques au sein de l'une au moins des cellules du module défaillant. La taille des dendrites croît tant que le courant de surdécharge est maintenu, jusqu'à former un chemin de court-circuit entre les électrodes de l'une des cellules du module défaillant.

Lorsque les dendrites métalliques constituent un pont entre les électrodes d'une cellule électrochimique, un court-circuit apparaît (phase 4 de la figure 3). Le module défaillant, ainsi court-circuité, est équivalent à un fil conducteur de faible résistance, de l'ordre de 10 mΩ, par exemple.

Une telle batterie est adaptée pour être utilisée à bord d'un satellite. Un satellite comprend, de façon générale, un émetteur-récepteur radio pour communiquer avec une station de contrôle terrestre. Cet émetteur-récepteur radio est agencé pour envoyer l'identification du module défaillant à la station de contrôle, qui lui retourne, le cas échéant, une commande dé neutralisation du module défaillant.

Le nombre de modules qui constituent la batterie est fixé par la tension d'alimentation du dispositif alimenté par celle-ci. Ainsi, en général, une batterie est composée de 9 à 24 modules.

Par ailleurs, le nombre de cellules électrochimiques dans chaque module dépend de l'intensité du courant d'alimentation qui doit être délivré. En outre, il n'est, de préférence, pas trop élevé, étant donné que la défaillance d'une cellule entraîne la neutralisation du module entier. En général, le nombre de cellules par module est compris entre 3 et 13.

## Revendications

1. Procédé de gestion d'une batterie (1) rechargeable comprenant au moins deux modules (2a, ..., 2n) de cellules (3a, ..., 3p) électrochimiques connectés en série, les cellules (3a, ..., 3p) électrochimiques étant connectées en parallèle les unes aux autres à l'intérieur de chaque module (2a, ... , 2n) et chaque module (2a, ..., 2n) de cellules électroniques (3a, ..., 3p) comprenant un circuit de limitation (4) de charge dudit module connecté en parallèle audit module, le procédé comportant les étapes suivantes :
- (a) détecter un module (2a, ..., 2n) défaillant ;
- (b) faire traverser le module (2a, ..., 2n) défaillant par un courant de décharge de façon à provoquer une réaction électrochimique dans le module (2a, ..., 2n) défaillant, ladite réaction résultant en la formation d'un chemin de court-circuit entre des bornes de connexion dudit module défaillant ;
- (c) utiliser la batterie (1) en faisant passer un courant électrique généré par la décharge d'au moins un module (2a, ..., 2n) différent du module (2a, ..., 2n) défaillant au travers dudit module (2a, ..., 2n) défaillant ;
et étant **caractérisé en ce qu'**une première décharge partielle du module (2a, ..., 2n) défaillant est effectuée avant l'étape (b), un courant de décharge partielle du module (2a, ..., 2n) défaillant traversant le circuit de limitation (4) de charge dudit module (2a, ..., 2n) défaillant, et étant commandé par variation d'un signal de référence du circuit de limitation (4) de charge dudit module défaillant.

2. Procédé selon la revendication 1, suivant lequel les cellules (3a, ..., 3p) sont du type lithium-ion.

3. Procédé selon la revendication 1 ou 2, suivant lequel le courant de décharge provoquant la réaction, de formation du chemin de court-circuit est généré par la décharge d'au moins un module (2a, ..., 2n) de la batterie (1) différent du module (2a, ..., 2n) défaillant.

4. Procédé selon la revendication 3, suivant lequel le courant de décharge provoquant la réaction de formation du chemin de court-circuit est utilisé en outre pour alimenter un dispositif externe à la batterie (1).

5. Procédé selon l'une quelconque des revendications précédentes, suivant lequel le courant de décharge provoquant la réaction de formation du chemin de court-circuit dans le module (2a, ..., 2n) défaillant engendre une inversion du module (2a, ..., 2n) défaillant.

6. Procédé selon l'une quelconque des revendications précédentes, suivant lequel le chemin de court-circuit comprend des dendrites conductrices formées dans au moins une cellule (3a, ..., 3p) du module (2a, ..., 2n) défaillant.

7. Procédé selon la revendication 6, suivant lequel les dendrites conductrices sont métalliques.

8. Procédé selon l'une quelconque des revendications précédentes, suivant lequel le nombre de cellules (3a, ..., 3p) par module (2a, ..., 2n) est compris entre 3 et 13.

9. Procédé selon l'une quelconque des revendications précédentes, suivant lequel le nombre de modules (2a, ..., 2n) dans la batterie (1) est compris entre 9 et 24.

10. Batterie (1) rechargeable pour mettre en oeuvre le procédé selon l'une des revendications précédentes comprenant au moins deux modules (2a, ..., 2n) de cellules (3a, ..., 3p) électrochimiques connectés en série, les cellules (3a, ..., 3p) électrochimiques étant connectées en parallèle les unes aux autres à l'intérieur de chaque module, chaque module (2a, ..., 2n) comprenant en outre un circuit de limitation (4) de charge dudit module (2a, ..., 2n) connecté en parallèle audit module, chaque circuit de limitation (4) de charge comprenant :
- une branche de dérivation connectée entre une borne d'entrée et une borne de sortie du module (2a, ..., 2n) de batterie (1) correspondant ;
- une source de signal de référence (8) ;
- un dispositif de régulation (6) adapté pour contrôler un courant dans ladite branche de dérivation sur la base d'un signal de commande reçu sur une borne de commande du dispositif de régulation (6) ; et
- au moins un opérateur différentiel (7) comprenant une borne de sortie reliée à la borne de commande du dispositif de régulation (6), une première borne d'entrée connectée pour recevoir un signal représentatif de la tension aux bornes dudit module (2a, ..., 2n) de batterie (1), et une seconde borne d'entrée connectée pour recevoir ledit signal de référence, l'opérateur différentiel (7) étant adapté pour générer le signal de commande en fonction d'une différence entre les signaux reçus sur lesdites première et seconde bornes d'entrée de l'opérateur différentiel (7) ;
et dans laquelle la source de signal de référence (8) du circuit de limitation de charge de chaque module (2a, ..., 2n) de batterie (1) peut être variée de façon à décharger partiellement un module défaillant.

11. Batterie (1) selon la revendication 10, dans laquelle la branche de dérivation comprend au moins un élément résistif (5).

12. Batterie (1) selon la revendication 10 ou 11, dans laquelle le signal représentatif de la tension de sortie de chaque module (2a, ..., 2n) est obtenu par un pont diviseur de tension connecté en parallèle audit module.

13. Batterie (1) selon l'une quelconque des revendications 10 à 12, comprenant au moins un récepteur radio, dans laquelle les sources respectives de signal de référence des modules (2a, ... ,2n) de cellules (3a, ... ,3p) électrochimiques sont reliées au récepteur radio, et sont adaptées pour varier le signal de référence correspondant en fonction d'une commande radio reçue.

14. Batterie (1) selon l'une quelconque des revendications 10 à 13, dans laquelle l'opérateur différentiel (7) de chaque circuit de limitation (4) de charge comprend une boucle de rétroaction (9).

15. Batterie (1) selon la revendication 14, dans laquelle la boucle de rétroaction (9) comprend une résistance et un condensateur connectés en série.

16. Batterie (1) selon l'une quelconque des revendications 10 à 15, dans laquelle le dispositif de régulation (6) du circuit de limitation (4) de charge de chaque module (2a, ..., 2n) comprend au moins un transistor, ledit transistor ayant deux bornes principales connectées à la branche de dérivation dudit module.

17. Batterie (1) selon la revendication 16, dans laquelle le dispositif de régulation (6) de chaque circuit de limitation (4) de charge comprend au moins deux transistors associés en montage Darlington.

18. Batterie (1) selon l'une quelconque des revendications 10 à 17, dans laquelle le nombre de cellules (3a, ..., 3p) par module (2a, ..., 2n) est compris entre 3 et 13.

19. Batterie (1) selon l'une quelconque des revendications 10 à 18, dans laquelle le nombre de modules (2a, ..., 2n) par batterie (1) est compris entre 9 et 24.

20. Satellite comprenant au moins une batterie (1) selon l'une quelconque des revendications 10 à 19.

21. Satellite selon la revendication 20, comprenant en outre un détecteur de module (2a, ..., 2n) défaillant, et un émetteur d'émission radio agencé pour transmettre des codes d'identification d'un module (2a, ..., 2n) défaillant dans la batterie (1).

22. Satellite selon la revendication 20 ou 21, comprenant en outre un récepteur radio, dans lequel les sources respectives de signal de référence des modules (2a, ..., 2n) de cellules (3a, ..., 3p) électrochimiques sont reliées au récepteur radio, et sont adaptées chacune pour varier le signal de référence correspondant en fonction d'une commande radio reçue.

## Claims

1. A method of managing a rechargeable battery (1) comprising at least two modules (2a, ..., 2n) of electrochemical cells (3a, ..., 3p) connected in series, said electrochemical cells (3a, ..., 3p) being connected in parallel to each other within each said module (2a, ..., 2n) and each said module (2a, ..., 2n) of said electrochemical cells (3a, ..., 3p) comprising a charge limiting circuit (4) for said module connected in parallel to said module, the method comprising the following steps:
- (a) detecting a defective module (2a, ..., 2n);
- (b) having a discharge current pass through said defective module (2a, ..., 2n) so as to provoke an electrochemical reaction in said defective module (2a, ..., 2n), said reaction resulting in the formation of a short-circuit path between connection terminals of said defective module;
- (c) using said battery (1) by passing an electric current, generated by a discharging of at least one said module (2a, ..., 2n) different from said defective module (2a, ..., 2n), through said defective module (2a, ..., 2n) and being **characterized in that** a first partial discharge of said defective module (2a, ..., 2n) is performed before step (b), a partial discharge current of said defective module (2a, ..., 2n) passing through said charge limiting circuit (4) of said defective module (2a, ..., 2n), and being controlled by variation of a reference signal for said charge limiting circuit (4) of said defective module.

2. The method as claimed in claim 1, wherein said cells (3a, ..., 3p) are of the lithium-ion type.

3. The method as claimed in claim 1 or 2, wherein said discharge current provoking said reaction forming said short-circuit path is generated by a discharging of at least one module (2a, ..., 2n) of said battery (1) different from said defective module (2a, ..., 2n).

4. The method as claimed in claim 3, wherein said discharge current provoking said reaction forming said short circuit path is also used to power a device external to said battery (1).

5. The method as claimed in any one of the previous claims, wherein said discharge current provoking said reaction forming said short-circuit path in said defective module (2a, ..., 2n) generates a reversal of said defective module (2a, ..., 2n).

6. The method as claimed in any one of the previous claims , wherein said short-circuit path comprises conductive dendrites formed in at least one cell (3a, ..., 3p) of said defective module (2a, ..., 2n).

7. The method as claimed in claim 6, wherein the conductive dendrites are metallic.

8. The method as claimed in any one of the previous claims , wherein the number of said cells (3a, ..., 3p) per said module (2a, ..., 2n) is between 3 and 13.

9. The method as claimed in any one of the previous claims , wherein the number of said modules (2a, ..., 2n) in said battery (1) is between 9 and 24.

10. A rechargeable battery (1) for implementing the method as in any one of the previous claims comprising at least two modules (2a, ..., 2n) of electrochemical cells (3a, ..., 3p) connected in series, said electrochemical cells (3a, ..., 3p) being connected in parallel to each other within each module (2a, ..., 2n), each module (2a, ..., 2n) also comprising a charge limiting circuit (4) for said module (2a, ..., 2n) connected in parallel to said module, each charge limiting circuit (4) comprising:
- a bypass branch connected between an input terminal and an output terminal of said corresponding battery module (2a, ..., 2n);
- a reference signal source (8);
- a regulating device (6) suitable for controlling a current in said bypass branch on the basis of a control signal received on a control terminal of said regulating device (6); and
- at least one differential operator (7) comprising an output terminal linked to said control terminal of said regulating device (6), a first input terminal connected to receive a signal representative of the voltage at said terminals of said module (2a, ..., 2n) of said battery (1), and a second input terminal connected to receive said reference signal, said differential operator (7) being suitable for generating said control signal according to a difference between the signals received on said first and second input terminals of said differential operator (7);
and wherein said reference signal source (8) of said charge limiting circuit of each module (2a, ..., 2n) of said battery (1) can be varied so as to partially discharge a defective module.

11. The battery (1) as claimed in claim 10, wherein said bypass branch comprises at least one resistive element (5).

12. The battery (1) as claimed in claim 10 or 11, wherein the signal representative of the output voltage of each module (2a, ..., 2n) is obtained by a voltage divider bridge connected in parallel to said module.

13. The battery (1) as claimed in any one of claims 10-12, comprising at least one radio receiver, wherein the respective reference signal sources of said modules (2a, ..., 2n) of electrochemical cells (3a, ..., 3p) are linked to said radio receiver, and are suitable for varying the corresponding reference signal according to a received radio control.

14. The battery (1) as claimed in any one of claims 10-13, wherein said differential operator (7) of each charge limiting circuit (4) comprises a feedback loop (9).

15. The battery (1) as claimed in claim 14, wherein said feedback loop (9) comprises a resistor and a capacitor connected in series.

16. The battery (1) as claimed in any one of claims 10-15, wherein said regulating device (6) of said charge limiting circuit (4) of each module (2a, ..., 2n) comprises at least one transistor, said transistor having two main terminals connected to said bypass branch of said module.

17. The battery (1) as claimed in claim 16, wherein said regulating device (6) of each charge limiting circuit (4) comprises at least two associated transistors in Darlington configuration.

18. The battery (1) as claimed in any one of claims 10-17, wherein the number of cells (3a, ..., 3p) per module (2a, ..., 2n) is between 3 and 13.

19. The battery (1) as claimed in any one of claims 10-18, wherein the number of modules (2a, ..., 2n) per battery (1) is between 9 and 24.

20. A satellite comprising at least one battery (1) as claimed in any one of claims 10-19.

21. The satellite as claimed in claim 20, also comprising a defective module (2a, ..., 2n) detector and a radio transmitter arranged to transmit identification codes of a defective module (2a, ..., 2n) in said battery (1).

22. The satellite as claimed in claim 20 or 21, also comprising a radio receiver, wherein the respective reference signal sources of said modules (2a, ..., 2n) of electrochemical cells (3a, ..., 3p) are linked to said radio receiver, and are each suitable for varying the corresponding reference signal according to a received radio control.

## Patentansprüche

1. Verfahren zur Steuerung einer wiederaufladbaren Batterie (1), umfassend wenigstens zwei Module (2a,...,2n) in Serie verbundener elektrochemischer Zellen (3a,...,3p), wobei die elektrochemischen Zellen (3a,...,3p) im Inneren jedes Moduls (2a,...,2n) parallel zueinander verbunden sind und wobei jedes Modul (2a,...,2n) elektronischer Zellen (3a,...,3p) einen parallel mit dem Modul verbundenen Ladebegrenzungsschaltkreis (4) des Moduls umfasst, wobei das Verfahren die folgenden Schritte umfasst:
- (a) Erkennen eines fehlerhaften Moduls (2a,...,2n);
- (b) Leiten eines Entladestroms durch das fehlerhafte Modul (2a,...,2n) zum Auslösen einer elektrochemischen Reaktion in dem fehlerhaften Modul (2a,...,2n), wobei die Reaktion zur Bildung eines Kurzschlusspfads zwischen den Anschlüssen des fehlerhaften Moduls führt;
- (c) Nutzen der Batterie (1) indem ein durch Entladen wenigstens eines von dem fehlerhaften Modul (2a,...,2n) verschiedenen Moduls (2a,...,2n) erzeugter elektrischer Strom durch das fehlerhafte Modul (2a,...,2n) geleitet wird;
und **dadurch gekennzeichnet, dass** eine erste Teilentladung des fehlerhaften Moduls (2a,...,2n) vor dem Schritt (b) durchgeführt wird, wobei ein Teilentladestrom des fehlerhaften Moduls (2a,...,2n) durch den Ladebegrenzungsschaltkreis (4) des fehlerhaften Moduls (2a,...,2n) fließt, und wobei die Steuerung durch Variation eines Referenzsignals des Ladebegrenzungsschaltkreises (4) das fehlerhafte Modul erfolgt.

2. Verfahren nach Anspruch 1, wobei die Zellen (3a,...,3p) vom Typ Lithium-Ionen sind.

3. Verfahren nach Anspruch 1 oder 2, wobei der Entladestrom, welcher die Reaktion der Bildung des Kurzschlusspfads auslöst, durch die Entladung wenigstens eines von dem fehlerhaften Modul (2a,...,2n) verschiedenen Moduls (2a,...,2n) der Batterie (1) erzeugt wird.

4. Verfahren nach Anspruch 3, wobei der Entladestrom, welcher die Reaktion der Bildung des Kurzschlusspfads auslöst, darüber hinaus zur Versorgung einer zu der Batterie (1) externen Vorrichtung genutzt wird.

5. Verfahren nach einem der vorangehenden Ansprüche, wobei der Entladestrom, welcher die Reaktion der Bildung des Kurzschlusspfads in dem fehlerhaften Modul (2a,...,2n) auslöst, eine Inversion des fehlerhaften Moduls (2a,...,2n) bewirkt.

6. Verfahren nach einem der vorangehenden Ansprüche, wobei der Kurzschlusspfad leitfähige Dendriten umfasst, welche in wenigstens einer Zelle (3a,...,3p) des fehlerhaften Moduls (2a,...,2n) gebildet sind.

7. Verfahren nach Anspruch 6, wobei die leitfähigen Dendriten metallisch sind.

8. Verfahren nach einem der vorangehenden Ansprüche, wobei die Anzahl der Zellen (3a,...,3p) pro Modul (2a,...,2n) zwischen 3 und 13 liegt.

9. Verfahren nach einem der vorangehenden Ansprüche, wobei die Anzahl der Module (2a,...,2n) in der Batterie (1) zwischen 9 und 24 liegt.

10. Wiederaufladbare Batterie (1) zum Ausführen des Verfahrens nach einem der vorangehenden Ansprüche, umfassend wenigstens zwei Module (2a,...,2n) in Serie verbundener elektrochemischer Zellen (3a,...,3p), wobei die elektrochemischen Zellen (3a,...,3p) in einem jeden Modul parallel zueinander verbunden sind und wobei jedes Modul (2a,...,2n) ferner einen parallel mit dem Modul verbundenen Ladebegrenzungsschaltkreis (4) des Moduls (2a,...,2n) umfasst, wobei jeder Ladebegrenzungsschaltkreis (4) umfasst:
- einen zwischen einem Eingangsanschluss und einem Ausgangsanschluss des entsprechenden Moduls (2a,...,2n) der Batterie (1) eingerichteten Umleitungszweig;
- eine Referenzsignalquelle (8);
- eine Regelvorrichtung (6), welche dazu ausgebildet ist, einen Strom in dem Umleitungszweig basierend auf einem von einem Regelanschluss der Regelvorrichtung (6) empfangenen Steuersignals zu regeln, und
- wenigstens einen Differentialoperator (7), welcher einen mit dem Steueranschluss der Steuervorrichtung (6) verbundenen Ausgangsanschluss, einen zum Empfangen eines für die Spannung der Anschlüsse des Moduls (2a,...,2n) der Batterie (1) repräsentativen Signals verbundenen ersten Eingangsanschluss und einen zum Empfangen des Referenzsignals verbundenen zweiten Eingangsanschluss umfasst, wobei der Differentialoperator (7) dazu ausgebildet ist, das Steuersignal abhängig von einer Differenz zwischen den am ersten und zweiten Eingangsanschluss des Differentialoperators (7) empfangenen Signalen zu erzeugen;
und wobei die Referenzsignalquelle (8) des Ladebegrenzungsschaltkreises jedes Moduls (2a,...,2n) der Batterie (1) zum Teilentladen eines fehlerhaften Moduls verändert werden kann.

11. Batterie (1) nach Anspruch 10, wobei der Umleitungszweig wenigstens ein Widerstandselement (5) umfasst.

12. Batterie (1) nach Anspruch 10 oder 11, wobei das für die Ausgangsspannung jedes Moduls (2a,...,2n) repräsentative Signal durch eine parallel an das Modul angeschlossene Spannungsteilerbrücke erhalten wird.

13. Batterie (1) nach einem der Ansprüche 10 bis 12, umfassend wenigstens einen Funkempfänger, wobei die jeweiligen Referenzsignalquellen der Module (2a,...,2n) der elektrochemischen Zellen (3a,...,3p) mit dem Funkempfänger verbunden sind und dazu ausgebildet sind, das entsprechende Referenzsignal abhängig von einem empfangenen Funkbefehl zu verändern.

14. Batterie (1) nach einem der Ansprüche 10 bis 13, wobei der Differentialoperator (7) jedes Ladebegrenzungsschaltkreises (4) eine Feedback-Schleife (9) umfasst.

15. Batterie (1) nach Anspruch 14, wobei die Feedback-Schleife (9) einen in Serie verbundenen Widerstand und Kondensator umfasst.

16. Batterie (1) nach einem der Ansprüche 10 bis 15, wobei die Regelvorrichtung (6) des Ladebegrenzungsschaltkreises (4) jedes Moduls (2a,...,2n) wenigstens einen Transistor umfasst, wobei der Transistor zwei an den Umleitungszweig des Moduls angeschlossene Hauptanschlüsse aufweist.

17. Batterie (1) nach Anspruch 16, wobei die Regelvorrichtung (6) jedes Ladebegrenzungsschaltkreises (4) wenigstens zwei durch Darlington-Schaltung verbundene Transistoren umfasst.

18. Batterie (1) nach einem der Ansprüche 10 bis 17, wobei die Anzahl der Zellen (3a,...,3p) pro Modul (2a,...,2n) zwischen 3 und 13 liegt.

19. Batterie (1) nach einem der Ansprüche 10 bis 18, wobei die Anzahl der Module (2a,...,2n) pro Batterie (1) zwischen 9 und 24 liegt.

20. Satellit, umfassend wenigstens eine Batterie (1) nach einem der Ansprüche 10 bis 19.

21. Satellit nach Anspruch 20, welcher ferner einen Detektor für fehlerhafte Module (2a,...,2n) umfasst, und einen Funksignal-Sender, der dazu angeordnet ist, Identifikationscodes eines fehlerhaften Moduls (2a,...,2n) in der Batterie (1) zu übertragen.

22. Satellit nach Anspruch 20 oder 21, welcher ferner einen Funkempfänger umfasst, wobei die jeweiligen Referenzsignalquellen der Module (2a,...,2n) der elektrochemischen Zellen (3a,...,3p) mit dem Funkempfänger verbunden sind und jeweils dazu ausgebildet sind, das entsprechende Referenzsignal abhängig von einem empfangenen Funkbefehl zu verändern.
